# EUROPÄISCHE PATENTANMELDUNG

(11) **EP 0 556 735 A1**
(43) Veröffentlichungstag der Anmeldung: **25.08.1993**
(21) Anmeldenummer: 93102206.5
(22) Anmeldetag: 12.02.1993
(51) Int. Cl.: A61C 13/34, A61C 11/00, A61C 9/00

(54) **Verfahren zur Herstellung von Dubletten eines Modelles für Zahnersatz und nach diesem Verfahren hergestellte Dubletten**

(30) Priorität: 15.02.1992 DE 4204618
(71) Anmelder: Krassmann, Hans, D-27299 Langwedel (DE)
(72) Erfinder: Krassmann, Hans, D-27299 Langwedel (DE)
(74) Vertreter: Eisenführ, Speiser & Partner

(57) **Zusammenfassung**

Es wird ein Verfahren zur Herstellung von Dubletten eines Modelles mit Retentionsstiften (2) für Zahnersatz angegeben, bei welchem das Modell mit einer Dubliermasse (6) umgeben wird, und bei dem das Modell aus der umhüllenden Dubliermasse (6) entfernt wird und bei dem sodann Einbettmasse (10) in die entstandene Negativform gefüllt und ausgehärtet wird. Um die Herstellung weitgehend fehlerfreier Dubletten zu vereinfachen und um passgenaue Dubletten zu gewinnen, werden in die entsprechenden Ausnehmungen (7) der Negativform vorgefertigte Stifte (8) eingesetzt. Sodann wird die Negativform mit Einbettmasse (10) ausgefüllt, welche sich beim Aushärten fest mit den Stiften (8) verbindet.

## Beschreibung

Die Erfindung betrifft ein Verfahren zur Herstellung von Dubletten eines Modelles mit Retentionsstiften für Zahnersatz, bei welchem das Modell mit einer Abdruckmasse umgeben wird und anschließend aus der umhüllenden Abdruckmasse entfernt wird, und bei dem sodann Einbettmasse in die entstandene Negativform gefüllt und ausgehärtet wird.

Die Erfindung betrifft außerdem eine nach diesem Verfahren hergestellte Dublette eines Modelles mit Retentionsstiften für Zahnersatz.

Ein solches Verfahren zur Herstellung von Dubletten von Modellen ist bekannt und wird allgemein für die Herstellung von Dubletten von Modellen angewendet. Bei diesem bekannten Verfahren ist jedoch nachteilig, daß es beim Ausfüllen der Negativform mit einer Einbettmasse z.B. wegen des hydrophoben Verhaltens des die Negativform bildenden Materials zu Lufteinschlüssen und anderen Ungenauigkeiten kommen kann, welche zwangsläufig zur Einschränkung der Verwendbarkeit der Dublette führen bzw. die Dublette sogar unbrauchbar machen.

Aufgabe der Erfindung ist es, ein Verfahren zur Herstellung von Dubletten anzugeben, welches die Anfertigung exakter Dubletten von Modellen gestattet.

Aufgabe der Erfindung ist es ferner, eine Dublette eines Modelles anzugeben, welche passgenau und einfach herstellbar ist.

Diese Aufgaben werden bei dem Verfahren der eingangs genannten Art erfindungsgemäß dadurch gelöst, daß in die den Retentionsstiften entsprechenden Ausnehmungen der Negativform passgenaue Stifte eingesetzt werden und daß dann die Negativform mit Einbettmasse aufgefüllt wird, welche sich beim Aushärten mit den Stiften fest verbindet.

Der Vorteil der Erfindung liegt insbesondere darin, daß vorgefertigte Stifte verwendet werden, die außerhalb der Negativform (Dublierform) fehlerfrei hergestellt werden können, so daß nach dem Einsetzen der Stifte in die Negativform nur noch der verbleibende Hohlraum mit Einbettmasse ausgegossen werden muß. Dadurch wird die Gefahr vermieden, daß bei ansonsten notwendigem Ausgießen der von den Retentionsstiften erzeugten Ausnehmungen Lufteinschlüsse und sonstige Ungenauigkeiten entstehen. Da dieser verbleibende Hohlraum deutlich größer ist als die zur Aufnahme der Stifte vorgesehenen Ausnehmungen der Dublierform, ist die Gefahr von Lufteinschlüssen in diesem verbleibenden Hohlraum erheblich geringer.

In einer besonders bevorzugten Ausführungsform des Verfahrens werden die Retentionsstifte des Modelles vor dem Umhüllen mit Dubliermasse mit einer Beschichtung vorgegebener Dicke versehen. Dadurch wird erreicht, daß zwischen der anhand der Dublette angefertigten Matrize und dem Modellguß (Patrize) im Bereich der Stifte ein Spielraum entsprechend der Dicke der Beschichtung zwischen den Stiften der Patrize und den entsprechenden Ausnehmungen der Matrize verbleibt, welcher beim Aufsetzen der Matrize auf die Patrize den zur Befestigung verwendeten Klebstoff aufnehmen kann; es ist somit möglich, eine spannungsfreie Klebeverbindung zu schaffen.

Bei einer bevorzugten Ausführungsform des Verfahrens ragen die Stifte mit einem Sockelabschnitt aus den Ausnehmungen heraus. Dadurch haben die Stifte nicht nur mit der entsprechenden Stirnseite Kontakt zu der aus der Einbettmasse gebildeten Basis, sondern die herausragenden Sockelabschnitte werden in die Einbettmasse eingebettet und schaffen somit eine besonders sichere mechanische Verbindung zwischen Stift und Einbettmasse.

Gemäß einer besonders bevorzugten Ausführungsform der Erfindung erfolgt die Beschichtung der auf dem Modell vorhandenen Stifte durch einseitig geschlossene Hüllen, die auf die Retentionsstifte aufgeschoben werden. Dadurch wird dieser Arbeitsgang deutlich vereinfacht und beschleunigt, da die aufschiebbaren Hüllen wiederum vorgefertigt werden können und eine gleichmäßige Beschichtung auf dem Stift ergeben, die später auch zu einem gleichmäßigen Zwischenraum zwischen Patrize und Matrize führt.

Vorteilhafte Weiterbildungen der Erfindung sind durch die Merkmale der Unteransprüche gekennzeichnet.

Im folgenden wird ein Ausführungsbeispiel der Erfindung anhand der Zeichnungen näher erläutert. Es zeigen:
- Fig. 1: Schnittdarstellung eines Modelles;
- Fig. 2: Schnittdarstellung des Modelles aus Fig. 1 mit Beschichtung;
- Fig. 3: Schnittdarstellung des Modelles mit Beschichtung und mit aufgebrachter Umhüllung;
- Fig. 4: Schnittdarstellung der durch das Entfernen des Modelles und der Beschichtung aus der Umhüllung entstandenen Negativform;
- Fig. 5: Schnittdarstellung der Negativform mit eingesetzten vorgefertigten Stiften;
- Fig. 6: Schnittdarstellung der Negativform mit eingesetzten Stiften und ausgefülltem restlichen Hohlraum;
- Fig. 7: Schnittdarstellung der fertigen Dublette.

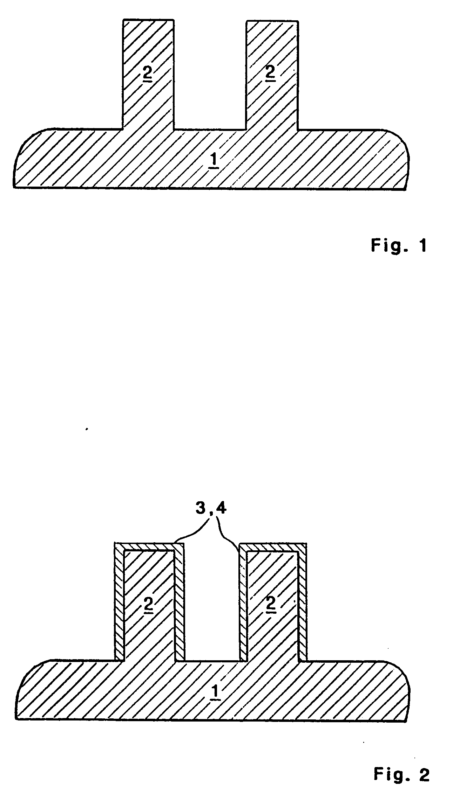

In Fig. 1 ist ein Modell 1 mit zwei einstückig angeformten Stiften 2 dargestellt, die senkrecht zur Basis des Modelles von zervikal nach okklusal verlaufen.

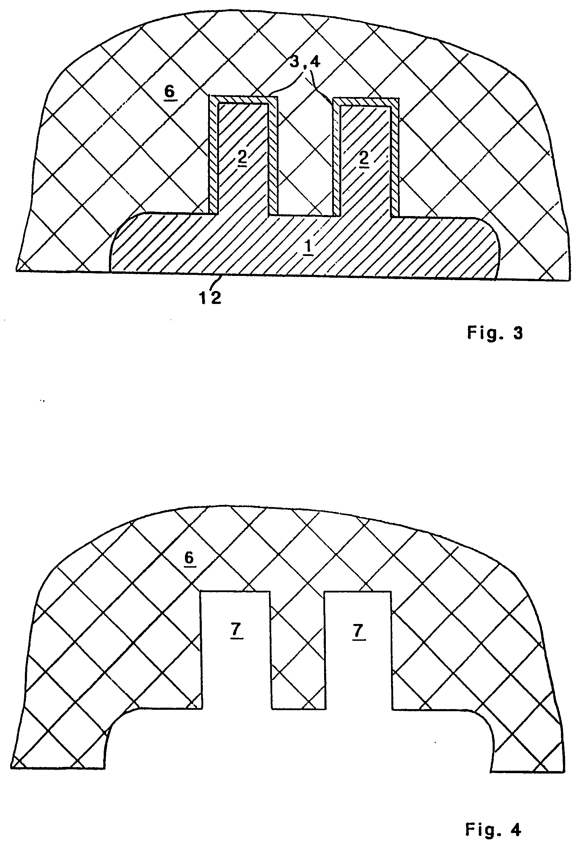

Fig. 2 zeigt das Modell 1 mit den Stiften 2, welche mit einer Beschichtung 3 versehen sind, die hier als vorgefertigte aufschiebbare, einseitig geschlossene Hülle 4 mit einer gleichmäßigen Wandstarke ausgeführt und von okklusal her aufgeschoben ist.

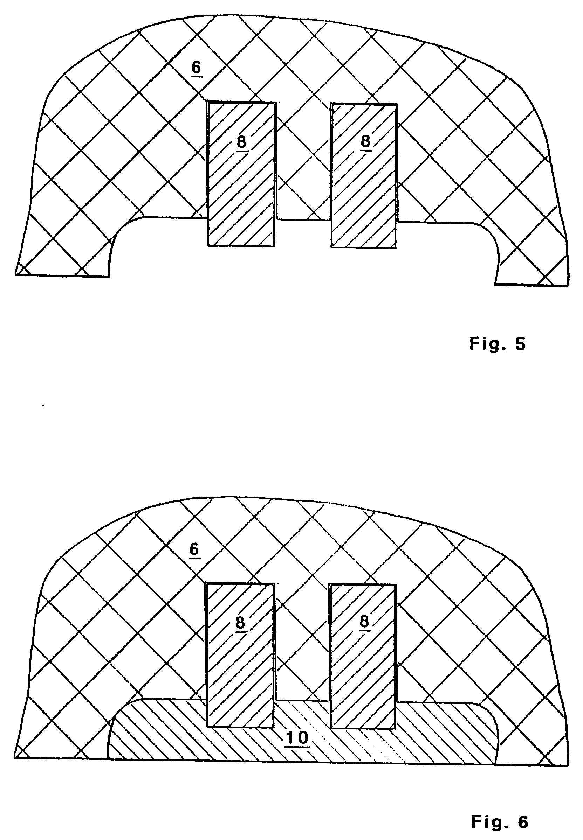

In Fig. 3 ist das Modell 1 mit den Stiften 2 sowie den als Beschichtung 3 aufgeschobenen Hüllen 4 bis zur Grundfläche der Basis 12 mit einer Dubliermasse 6 zur Herstellung der Negativform umgeben.

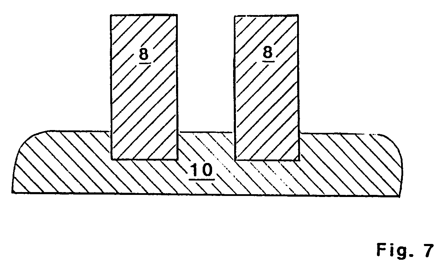

Fig. 4 zeigt die durch die Dubliermasse 6 gebildete Negativform, nachdem das Modell 1 mit den Stiften 2 und den Hüllen 4 entfernt ist. Die durch die Stifte 2 mit der aufgebrachten Beschichtung 3 entstandenen Ausnehmungen 7 in der Negativform weisen bereits eine um die doppelte Wandstärke der Beschichtung größere lichte Weite auf als die Stifte 2 des Modelles 1 ohne aufgebrachte Beschichtung 3.

In Fig. 5 ist die aus der Dubliermasse 6 gebildete Negativform mit eingesetzten vorgefertigten Stiften 8 dargestellt. Diese vorgefertigten Stifte 8 sind so bemessen, daß sie die Ausnehmungen 7 der Negativform im Querschnitt exakt ausfüllen, d.h. die vorgefertigten Stifte weisen einen Querschnitt auf, der dem der Stifte 2 auf dem Modell 1 einschließlich der aufgetragenen Beschichtung 3 entspricht. Die aus den Ausnehmungen 7 herausragenden Abschnitte der vorgefertigten Stifte 8 sind so bemessen, daß sie ausreichend tief in eine Einbettmasse hineinreichen, um eine sichere Einbettung in der Basis zu erreichen.

In Fig. 6 ist die aus der Dubliermasse 6 gebildete Negativform mit den in die Ausnehmungen 7 eingesetzten vorgefertigten Stifte 8 dargestellt, welche in eine Einbettmasse 10, mit der die Negativform aufgefüllt ist, eingebettet sind und senkrecht zur Basis der Dublette von zervikal nach okklusal verlaufen.

Fig. 7 zeigt die fertige Dublette nach dem Entfernen der Negativform. Diese entspricht im wesentlichen dem Vorbild, jedoch mit dem Unterschied, daß die in die aus der Dubliermasse 10 gebildeten Basis eingebetteten Stifte 8 einen Querschnitt aufweisen, der dem der Stifte 2 einschließlich der Beschichtung 3 entspricht. Eine mittels dieser Dublette angefertigte Matrize wird also Ausnehmungen aufweisen, welche dem Querschnitt der vorgefertigten Stifte 8 entsprechen und somit beim Aufsetzen auf das Modell einen Spielraum zwischen Stift und Wandung der Ausnehmung freilassen, der genau der Wandstärke der Beschichtung entspricht und als Raum für Kleb- oder Füllstoffe zur Verfügung steht.

## Patentansprüche

1. Verfahren zur Herstellung von Dubletten eines Modelles mit Retentionsstiften für Zahnersatz, bei welchem das Modell mit einer Dubliermasse umgeben wird und anschließend aus der umhüllenden Dubliermasse entfernt wird, und bei dem sodann Einbettmasse in die entstandene Negativform gefüllt und ausgehärtet wird,
dadurch gekennzeichnet, daß in die den Retentionsstiften (2) entsprechenden Ausnehmungen (7) der Negativform (5) passgenaue Stifte (8) eingesetzt werden und daß dann die Negativform (5) mit Einbettmasse (10) aufgefüllt wird, welche sich beim Aushärten mit den Stiften (8) fest verbindet.

2. Verfahren zur Herstellung von Dubletten eines Modelles mit Retentionsstiften für Zahnersatz nach Anspruch 1,
dadurch gekennzeichnet, daß die Retentionsstifte (2) des Modells (1) vor dem Umhüllen mit Dubliermasse (6) mit einer Beschichtung (3) vorgegebener Dicke versehen werden.

3. Verfahren zur Herstellung von Dubletten eines Modelles mit Retentionsstiften für Zahnersatz nach einem der vorstehenden Ansprüche,
dadurch gekennzeichnet, daß die Stifte (8) mit einem Sockelabschnitt aus den Ausnehmungen (7) herausragen.

4. Verfahren nach einem der vorstehenden Ansprüche,
dadurch gekennzeichnet, daß die Beschichtung (3) der Retentionsstifte (2) in Form einer aufschiebbaren, einseitig geschlossenen Hülle (4) erfolgt.

5. Verfahren nach Anspruch 4,
dadurch gekennzeichnet, daß die aufschiebbare Hülle (4) eine Wandstärke von 0,02 mm bis 0,2 mm aufweist.

6. Verfahren nach einem der vorstehenden Ansprüche,
dadurch gekennzeichnet, daß die Stifte (8) aus keramischem Material bestehen.

7. Verfahren nach einem der Ansprüche 1 bis 5,
dadurch gekennzeichnet, daß die Stifte (8) aus Metall bestehen.

8. Dublette eines Modelles mit Retentionsstiften für Zahnersatz,
dadurch gekennzeichnet, daß in einer Basis (10) aus aushärtbarer Einbettmasse (10) mindestens ein Stift (8) aus keramischem oder metallischem Werkstoff verankert ist.
